# EUROPEAN PATENT SPECIFICATION

(11) **EP 0 391 701 B1**
(45) Date of publication and mention of the grant of the patent: **18.01.1995**
(21) Application number: 90303639.0
(22) Date of filing: 04.04.1990
(51) Int. Cl.: C23C 8/80, F16C 33/12

(54) **Sliding machine component with soft-nitrided surface layer**
Gleitendes Maschinenteil mit weich-nitrierter Oberflächenschicht
Pièce de frottement pour machine pourvue d'une surface nitrurée doucement

(30) Priority: 05.04.1989 JP 86428/89; 21.11.1989 JP 300727/89
(43) Date of publication of application: 10.10.1990
(73) Proprietor: HONDA GIKEN KOGYO KABUSHIKI KAISHA, Minato-ku, Tokyo (JP)
(72) Inventor: Kanno, Tadao, c/o Honda Engineering, Sayama-shi, Saitama (JP); Imai, Hitoshi, c/o Honda Engineering, Sayama-shi, Saitama (JP)
(74) Representative: Pedder, James Cuthbert

(56) References cited:
- EP-A- 0 183 375
- US-A- 3 104 917
- US-A- 3 419 363
- US-A- 4 204 886
- PATENT ABSTRACTS OF JAPAN, vol. 12, no. 5 (C-467)[2852], 8th January 1988; & JP-A-62 161 966 (TOYOTA MOTOR CORP.) 17-07-1987
- HÄRTEREI-TECHNISCHE MITTEILUNGEN, vol. 36, no. 1, January-February 1981, pages 1-18, Munich, DE; M. KOUTNIK et al.: "Einfluss der Verteilung von Nitridausscheidungen auf die Ermüdungsvorgänge in carbonitriertem Stahl"
- HÄRTEREI-TECHNISCHE MITTEILUNGEN, vol. 42, no. 6, November-December 1987, pages 321-331, Munich, DE; M.A.J. SOMERS et al.: "Porenbildung und Kohlenstoffaufnahme beim Nitrocarburieren"
- DATABASE WPIL, Derwent Publications, London (GB), AN 86-140552 & JP-A-61075852

## Description

The present invention relates to an improved sliding machine component having a soft-nitrided surface layer.

Typical methods of treating the surfaces of iron-base materials for increased wear resistance and seizure resistance include the gas soft nitriding process and the Tufftride process. In the gas soft nitriding process, an iron-base material is held in an atmosphere comprising a carburizing modified gas and an ammonia gas at a temperature ranging from 500 to 590°C for 1 to 6 hours. In the Tufftride process, an iron-base material is immersed in a salt bath, with KCN + KCNO or NaCN + NaCO₃ added, at a temperature ranging from 500 to 590°C for 1 to 6 hours. According to these processes, a hardened surface layer of an Fe - C - N composition is formed on the iron-base material.

There have been proposed improvements over the known gas soft nitriding process. One improved process is directed to the application of a fluoroplastic coating to the surface of an Fe - C - N compound layer which is formed on an iron-base material by the gas soft nitriding process (see Japanese Patent Publication No. 58/40650). According to another improvement, the surface of an Fe - C - N compound layer is impregnated with wax (see Japanese Laid-Open Patent Publication No. 58/126977). However, the fluoroplastic is not highly resistant to heat, and the wax has a short service life. JP-A-61075852 discloses a soft nitrided sliding machine part on which a solid lubricant layer is applied.

JP-A-62161966 discloses the production of an outer layer of a surface produced by soft nitriding which can be impregnated with various materials.

EP-A-0183375 discloses examples of lubricants mainly consisting of PTFE which contains relative large amounts of CaF₂ or SrF₂. Various sliding machine components or parts such as the pistons of axial piston pumps, for example, which are held in sliding contact with cylinder walls at high speed under high load, cannot be rendered highly resistant to wear and seizure according to the conventional and known proposed surface treatment processes.

The present invention seeks to provide a sliding machine component which is excellent in wear resistance and seizure resistance.

A sliding machine component according to the present invention has a gas-soft-nitrided surface layer impregnated with calcium fluoride containing strontium in which the gas-soft-nitrided surface layer comprises an inner nitrogen-dispersed layer, an intermediate dense layer and an outer porous layer, the calcium fluoride containing strontium being in the form of a fine powder having a particle diameter ranging from 0.25 to 0.5» and containing strontium ranging from 9 to 82 ppm, the calcium fluoride containing strontium being present in the outer porous layer.

The surface layer may be compared to an Fe - C - N compound, and a fine powder of polytetrafluoroethylene is applied with the calcium fluoride containing strontium to the surface of and is present in the surface layer. Below a given contact load applied to the sliding machine component, the fine powders of calcium fluoride and polytetrafluoroethylene applied to the surface of the surface layer serve as lubricant. When the surface layer is worn under a load higher than the given contact load, the fine powders of calcium fluoride and polytetrafluoroethylene which are present in the holes in the outer porous layer then serve as lubricant.

The invention will now be described in greater detail, by way of example, with reference to the drawings, in which:-
FIG.1 is a fragmentary cross-sectional view of a sliding machine component according to a first embodiment of the present invention;
FIG.2 is a view showing a test pin and a pair of blocks with the pin sandwiched therebetween;
FIG.3 is a graph showing the relationship between loads and coefficients of friction with respect to three tested sliding machine components having different contents of strontium;
FIG.4 is a graph showing the relationship between contents of strontium, coefficients of friction, and seizure times; and
FIG.5 is a fragmentary cross-sectional view of a surface layer of a sliding machine component according to a second embodiment of the present invention.

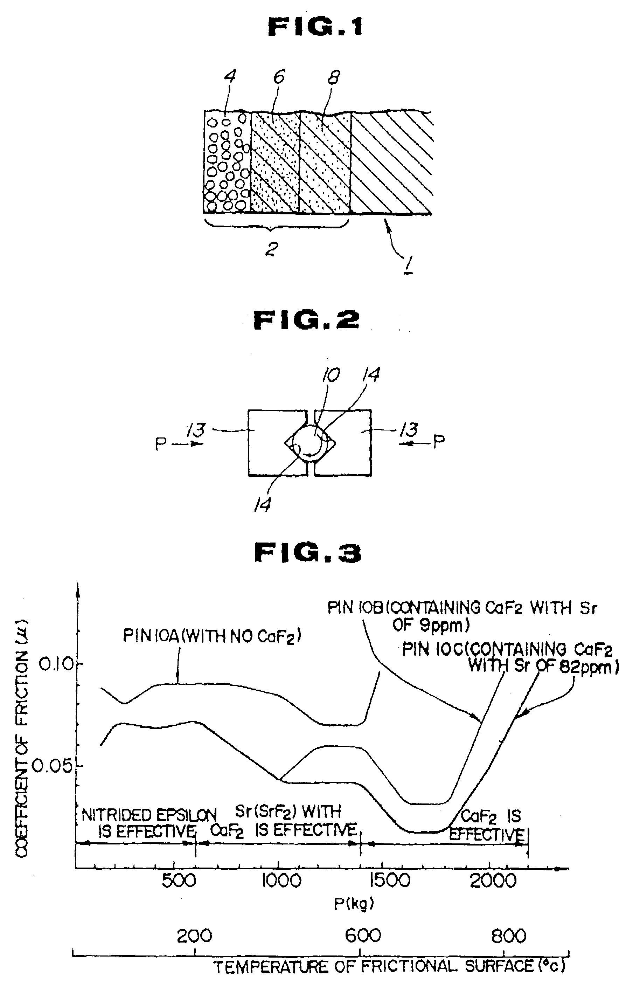

As shown in FIG.1, a surface layer 2 of an Fe - C - N compound is formed on the surface of a sliding machine component 1 of an iron-base material according to the gas soft nitriding process. The surface layer 2 may be formed on the sliding machine component 1 according to the Tufftride process, the ion nitriding process, or the like. The nitrided surface layer 2 comprises an outer porous layer 4 of an epsilon structure, an intermediate dense layer 6, and an inner nitrogen-dispersed layer 8 held in contact with the base material of the sliding machine component 1.

According to a first embodiment of the present invention, the outer porous layer 4 is impregnated with calcium fluoride (CaF₂) containing strontium. The calcium fluoride has a hexagonal crystalline structure, and does not stick or seize to iron. Therefore, the calcium fluoride is an effective solid lubricant in a high temperature range from 250 to 900 °C. The strontium also has a low coefficient of sticking or seizure to iron, and is of a cubic close-packed structure at normal temperature, of a hexagonal close-packed structure in a temperature range from 213 to 620 °C, and of a body-centered cubic structure in a temperature range from 621 to 769 °C. When the strontium is of a hexagonal close-packed structure, its crystal surface becomes slippery, i.e. ,its coefficient of friction is lowered. Such a crystalline structural change is also experienced by strontium fluoride. Strontium may be contained as SrF₂ in calcium fluoride.

The sliding machine component 1 thus surface treated has its coefficient of friction reduced primarily by the nitrided epsilon layer 4 in a low temperature range from the normal temperature to 213 °C. In a medium temperature range from 213 to 620 °C, the coefficient of friction of the sliding component 1 is lowered by the strontium contained in the calcium fluoride for increased seizure resistance. The larger the content of the strontium, the lower the coefficient of friction of the sliding machine component 1. In a high temperature range from 621 to 900 °C, the sliding machine component 1 provides good sliding capability since its seizure resistance is increased by the calcium fluoride (see FIG. 3).

### Example

A test pin 10 (FIG. 2) as an iron-base sliding machine component was sandwiched between V grooves 14 in a pair of confronting blocks 13. The peripheral surface of the pin 10 was treated by the gas soft nitriding process, so that a surface layer of an Fe - C - N composition, having a thickness ranging from 20» to 30» was formed on the pin 10. The pin 10 had a diameter of about 6.5 mm.

Fine powder of calcium fluoride, having a particle diameter of 0.25» and containing strontium, was uniformly dispersed in a solvent of acetone or Freon having a small surface tension, preferably of 2.5x10⁻²N/M(25 dyn/cm) or less. Thereafter, the pin 10 was immersed in the solution for a certain period of time, and then taken out to let the applied solution evaporate from the pin 10.

Three pins were prepared for comparison. One pin, denoted at 10A, contained no or almost no calcium fluoride. Another pin, denoted at 10B, was impregnated with calcium fluoride containing 9 ppm of strontium. The other pin, denoted at 10C, was impregnated with calcium fluoride containing 82 ppm of strontium.

The three pins were coated with engine oil, and a sliding test was conducted on the pins in the atmosphere while the pins rotated in the direction indicated by the arrow in FIG. 2 and were subjected to the load P applied to the blocks 13, under the following conditions:

| | |
|---|---|
| The speed at which the pins rotated: | 300 rpm |
| The initial value of the load P: | 60 kg |
| The rate of increase of the load P: | 25 kg/sec. |

FIG. 3 shows that impregnation of the calcium fluoride lowers the coefficient of friction, and the coefficient of friction remains low in a higher load range as the content of strontium is greater. The numerical values below the X-axis of FIG. 3 indicate the temperature of the frictional surface.

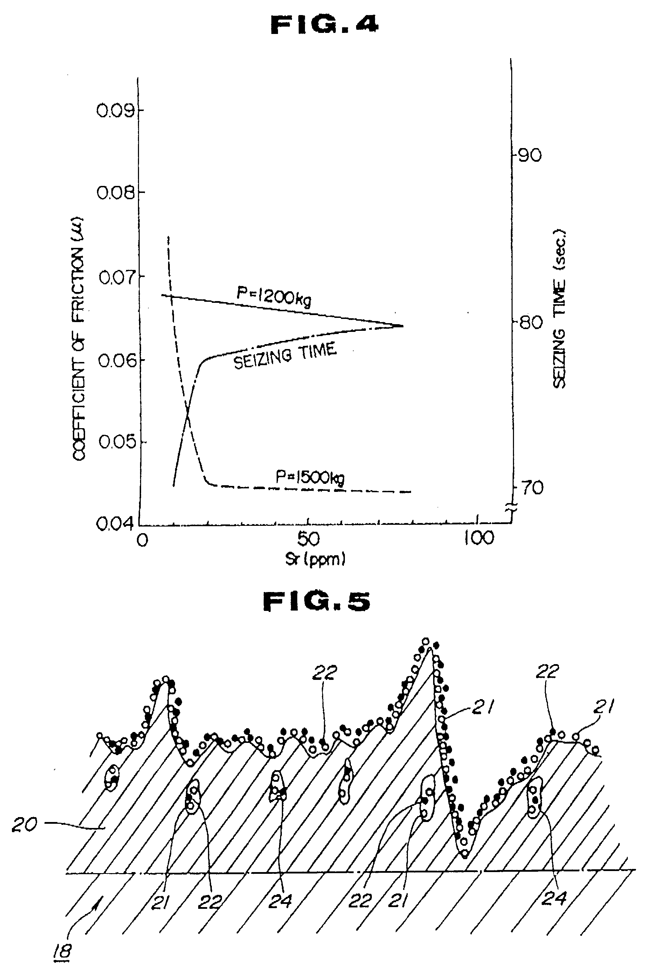

FIG. 4 shows coefficients of friction and times required for the pins to seize after the test started, plotted against the contents of strontium. It can be seen from FIG. 4 that when the content of strontium increased beyond 10 ppm, the coefficient of friction in a high load range decreased to a large extent and the seizing time greatly increased. The Hertz contact pressure was 295 kg/mm² when the load is P = 1,200 kg, and 330 kg/mm² when the load is P = 1,500 kg.

According to a second embodiment of the present invention, as shown in FIG. 5, fine powder 21 of calcium fluoride (CaF₂) containing strontium, and fine powder 22 of polytetrafluoroethylene are applied to the outer surface of a porous surface layer 20 of an Fe - C - N compound which has been formed on the surface of a sliding machine component 18 of an iron-base material according to the gas soft nitriding process. The fine powders 21, 22 are also impregnated in minute holes 24 in the surface layer 20, especially in a region close to the surface thereof. The surface layer 20 has a thickness of about 30» and a surface roughness ranging from 1 to 5»m(s). If the surface roughness were larger than 5»m(s), i.e., the surface layer 20 were too irregular, then the applied fine powders would be less effective. If the surface roughness were smaller than 1»m(s) i.e., the surface layer 20 were too smooth, then the fine powders would become difficult to apply to the surface layer 20. The particle diameter of the fine powders 21, 22 of calcium fluoride and polytetrafluoroethylene are in the range of from 0.25 to 0.5». If the particle diameter were small than 0.25», then the lubricating film applied to the surface layer 20 would be so thin that it would easily be removed. If the particle diameter were larger than 0.5», then the fine powders 21, 22 would be less liable to get into the holes 24 in the porous layer 20.

Although there have been described what are at present considered to be the preferred embodiments of a present invention, it will be understood that the invention may be embodied in other specific forms without departing from the essential characteristics thereof. The present embodiments are therefore to be considered in all aspects as illustrative, and not restrictive. The scope of the invention is indicated by the appended claims rather than by the foregoing description.

## Claims

1. A sliding machine component comprising a gas-soft-nitrided surface layer impregnated with calcium fluoride containing strontium characterised in that the gas-soft-nitrided surface layer comprises an inner nitrogen-dispersed layer, an intermediate dense layer and an outer porous layer, the calcium fluoride containing strontium being in the form of a fine powder having a particle diameter ranging from 0.25 to 0.5 » and containing strontium ranging from 9 to 82 ppm, the calcium fluoride containing strontium being present in the outer porous layer

2. A sliding machine component according to claim 1, characterised in that the surface layer is composed of an Fe - C -N compound and a fine powder of polytetrafluoroethylene is applied with the calcium fluoride containing strontium to the surface of and is present in the said surface layer.

3. A sliding machine component according to claim 2, characterised in that both the fine powders of calcium fluoride and of polytetrafluoroethylene are present in the outer porous layer.

4. A sliding machine component according to claim 2, characterised in that the gas-soft-nitrided surface layer has a surface roughness ranging from 1 to 5»m ( 1 to 5s) and both the fine powders of calcium fluoride and polytetrafluoroethylene have a particle diameter ranging from 0.25 to 0.5 ».

## Patentansprüche

1. Gleitendes Maschinenbauteil, umfassend eine mit Gas weichnitrierte Oberflächenschicht, die mit Strontium enthaltendem Kalziumfluorid imprägniert ist, dadurch gekennzeichnet, daß die mit Gas weichnitrierte Oberflächenschicht eine innere Schicht mit dispergiertem Stickstoff, eine dichte Zwischenschicht und eine poröse Außenschicht umfaßt, wobei das Strontium enthaltende Kalziumfluorid in Form eines feinen Pulvers mit einem Partikeldurchmesser im Bereich von 0,25 bis 0,5 »m und einem Strontiumgehalt von 9 bis 82 ppm vorliegt, wobei das Strontium enthaltende Kalziumfluorid in der porösen Außenschicht vorhanden ist.

2. Gleitendes Maschinenbauteil nach Anspruch 1, dadurch gekennzeichnet, daß die Oberflächenschicht einen Fe-C-N-Verbund umfaßt und ein feines Polytetrafluorethylen-Pulver mit dem Strontium enthaltenden Kalziumfluorid auf die Oberfläche der Oberflächenschicht aufgebracht wird und in der Oberflächenschicht vorhanden ist.

3. Gleitenes Maschinenbauteil nach Anspruch 2, dadurch gekennzeichnet, daß sowohl das feine Kalziumfluorid-Pulver als auch das feine Polytetrafluorethylen-Pulver in der porösen Außenschicht vorhanden sind.

4. Gleitenes Maschinenbauteil nach Anspruch 2, dadurch gekennzeichnet, daß die mit Gas weichnitrierte Oberflächenschicht eine Oberflächenrauhigkeit im Bereich von 1 bis 5 »m (1 bis 5 s) aufweist und sowohl das feine Kalziumfluorid-Pulver als auch das feine Polytetrafluorethylen-Pulver einen Partikeldurchmesser im Bereich von 0,25 bis 0,5 »m aufweisen.

## Revendications

1. Composant mécanique coulissant comprenant une couche superficielle ayant été soumise à une nitruration douce en phase gazeuse, imprégnée de fluorure de calcium contenant du strontium, caractérisé en ce que la couche superficielle soumise à une nitruration douce en phase gazeuse comprend une couche interne dans laquelle est dispersée de l'azote, une couche dense intermédiaire et une couche poreuse externe, le fluorure de calcium contenant du strontium étant sous forme d'une poudre fine ayant une granulométrie s'échelonnant de 0,25 à 0,5 »m et contenant du strontium à raison de 9 à 82 ppm, le fluorure de calcium contenant du strontium étant présent dans la couche poreuse externe.

2. Composant mécanique coulissant selon la revendication 1, caractérisé en ce que la couche superficielle se compose d'un composé Fe-C-N et qu'une poudre fine de polytétrafluoroéthylène est appliquée avec le fluorure de calcium contenant du strontium sur sa surface et est présent dans ladite couche superficielle.

3. Composant mécanique coulissant selon la revendication 2, caractérisé en ce que les poudres fines de fluorure de calcium et de polytétrafluoroéthylène sont toutes deux présentes dans la couche poreuse externe.

4. Composant mécanique coulissant selon la revendication 2, caractérisé en ce que la couche superficielle soumise à une nitruration douce en phase gazeuse a une rugosité de surface s'échelonnant de 1 à 5 »m (1 à 5 s) et les poudres fines de fluorure de calcium et de polytétrafluoroéthylène ont toutes deux une granulométrie s'échelonnant de 0,25 à 0,5 »m.
